# EUROPEAN PATENT SPECIFICATION

(11) **EP 3 542 047 B1**
(45) Date of publication and mention of the grant of the patent: **27.03.2024**
(21) Application number: 17797573.7
(22) Date of filing: 30.10.2017
(51) Int. Cl.: F02M 25/12, F02B 77/04

(54) **SYSTEM FOR CLEANING A VEHICLE'S INTERNAL COMBUSTION ENGINE AND USE THEREOF**
SYSTEM ZUR REINIGUNG EINES FAHRZEUGVERBRENNUNGSMOTORS UND DESSEN VERWENDUNG
SYSTÈME DE NETTOYAGE DU MOTEUR À COMBUSTION INTERNE D'UN VÉHICULE ET SON UTILISATION

(30) Priority: 18.11.2016 DK PA201600715; 23.08.2017 DK PA201700461
(43) Date of publication of application: 25.09.2019
(73) Proprietor: Hydrive APS, 8722 Hedensted (DK)
(72) Inventor: JENSEN, Uffe, Lauge, 8751 Gedved (DK)
(74) Representative: Larsen & Birkeholm A/S
(86) International application number: PCT/EP2017/077747
(87) International publication number: WO 2018/091258

(56) References cited:
- WO-A1-2007/022637
- WO-A1-2014/029015
- WO-A1-2016/174514
- CN-A- 105 673 199
- CN-U- 202 576 576
- CN-U- 204 357 584
- US-A1- 2013 220 240

## Description

### Technical field of the invention

The present invention relates to internal combustion engines, and more specifically to cleaning of internal combustion engines mounted on a vehicle driven by one or more internal combustion engines.

### Background of the invention

Most vehicles such as cars, motorcycles, trains, boats, and portable machinery, such as electric generators, utilize internal combustion engines. Generally, these engines use fossil fuel to operate.

In the internal combustion engine, combustion of a fuel occurs with an oxidizer (air) in a combustion chamber. The expansion of the high temperature and high-pressure gases produced by the combustion process exert forces to mechanical components of the engine transforming chemical energy into useful mechanical energy. Incomplete oxidation during the combustion, or improper combustion, may increase the emissions. Emissions carry harmful substances, such as carbon monoxides, nitrogen oxides, and other greenhouse gases, such as carbon dioxide that can adversely affect health and the environment. To control the emissions, users and manufacturers of internal combustion engines must comply with stringent regulations and emissions control standards.

For economic and environmental reasons, technologies on fuel and engine have been developed to produce internal combustion engines with improved fuel efficiency and reduced emissions. For example, unleaded fuels are used for reducing carbon deposits in the engine, and fuel additives are used for increasing performance and fuel efficiency of the engine. However, the effects of carbon build-up are still present in almost all vehicles, and the use of some fuel additives may further increase carbon deposits in the engine. Excessive build-up of carbon deposits in the engine will reduce engine performance and create significant drivability issues.

It is therefore desirable to provide a system, which can remove the already built-up carbon deposits in an internal combustion engine. Combustion engines are known from CN 105 673 199 A; CN 202 576 576 U; US 2013/220240 A1; CN 204 357 584 U; WO2007/022637 A1; WO2014/029015 A1; WO2016/174514 A1.

### Summary of the invention

The inventor of the present invention has provided an external system configured to remove the built-up of carbon deposits in an internal combustion engine. In the present context, the term "external system" refers to a system that is only connected to the internal combustion engine during the cleaning operation as opposed to devices that are connected to the internal combustion engine during normal use. Surprisingly, it was found that administering large quantities of hydrogen gas into the internal combustion engine when the engine operates idle, and during a period of 10-90 minutes was enough to remove the carbon deposits. Without being bound by any specific theory, it is speculated that the hydrogen reacts, in an exothermic reaction, with a) oxygen being co-administered and/or b) oxygen from the air intake duct of the internal combustion engine to form water vapor. This exothermic reaction, releases the carbon deposits from the inner walls of the engine system, thereby decreasing the NOX emission from the system.

A first aspect of the present invention relates to the use of a gas delivery system for cleaning an internal combustion engine; wherein the gas delivery system is adapted to deliver hydrogen gas, and optionally oxygen gas, into the air intake duct of the internal combustion engine when the engine operates idle; wherein the hydrogen gas is delivered at an amount of at least 15 liters per minute for a period of 10-90 minutes; wherein the hydrogen gas, and optionally the oxygen gas, is continuously produced by electrolysis of water.

A second aspect relates to a gas delivery system adapted for cleaning an internal combustion engine, the system comprising:
- means configured for producing hydrogen gas by performing electrolysis on water, and configured for delivering hydrogen in an amount of at least 15 liters per minute for a period of 10-90 minutes; and
- means adapted for transferring the produced hydrogen, and optional oxygen, to the air intake duct of an internal combustion engine when the engine operates idle.

A third aspect relates to the use of a gas delivery system configured to deliver hydrogen gas, and optionally oxygen gas, for cleaning an internal combustion engine; wherein an internal combustion engine with an engine displacement of 1-20 liters is treated with 900-2,500 liters of hydrogen gas per hour; wherein the hydrogen, and optionally the oxygen gas, is delivered into the air intake duct of the internal combustion engine; wherein the hydrogen gas, and optionally the oxygen gas, is continuously produced by means capable of performing electrolysis on water, and wherein a direct current electrical supply is configured to deliver direct current pulses of 200-1000 Hertz to the means capable of performing electrolysis on water.

A fourth aspect relates to a gas delivery system adapted for cleaning an internal combustion engine, the gas delivery system comprising:
- means capable of performing electrolysis on water; and
- means adapted for transferring the produced hydrogen to an internal combustion engine;
- a direct current electrical supply configured to deliver direct current pulses of 200-1000 Hertz to the means capable of performing electrolysis on water; and
- a controller adapted for receiving user input about the engine displacement of an internal combustion engine to be treated, the engine displacement being within the range of 1-20 liters, and in response to said input, instruct the means capable of performing electrolysis on water to produce a specific amount of hydrogen per hour within the range of 900-2,500 liters of hydrogen gas per hour.

### Detailed description of the invention

A first aspect of the present invention relates to the use of a gas delivery system for cleaning an internal combustion engine; wherein the gas delivery system is adapted to deliver hydrogen gas, and optionally oxygen gas, into the air intake duct of the internal combustion engine when the engine operates idle; wherein the hydrogen gas is delivered at an amount of at least 15 liters per minute for a period of 10-90 minutes; wherein the hydrogen gas, and optionally the oxygen gas, is continuously produced by electrolysis of water.

In one or more embodiments, the hydrogen gas and the oxygen gas is continuously produced in doses by electrolysis of water.

When a pulsed voltage is imposed on the terminals of an electrochemical cell a corresponding pulsed current through the cell is produced. In the present context, the pulsed current and pulsed voltage are generally interchangeable. A peak current is turned on for a period of time called the on-time, followed by a zero current for a period of time called the off-time. The sum of on-time and off-time is known as the period of the pulse and the inverse of the period is known as the frequency of the pulse. The percent on-time in a pulse is defined as the duty-cycle of the pulse. The pulsed voltage results in an increased production rate of hydrogen compared to normal DC electrolysis.

In one or more embodiments, the hydrogen gas and, optionally, the oxygen gas is continuously produced by means configured to perform electrolysis on water, and wherein a direct current electrical supply is configured to deliver direct current pulses of 200-1000 Hertz to the means configured to perform electrolysis on water, such as within the range of 250-950 Hertz, e.g. within the range of 300-900 Hertz, such as within the range of 350-850 Hertz, e.g. within the range of 400-800 Hertz, such as within the range of 450-750 Hertz, e.g. within the range of 500-700 Hertz, such as within the range of 550-650 Hertz.

In one or more embodiments, the hydrogen gas is delivered at an amount of at least 15 liters per minute for a period of 10-90 minutes, such as at least 20 liters hydrogen gas per minute for a period of 10-90 minutes, e.g. at least 25 liters hydrogen gas per minute for a period of 10-90 minutes, such as at least 30 liters hydrogen gas per minute for a period of 10-90 minutes, e.g. at least 35 liters hydrogen gas per minute for a period of 10-90 minutes, such as at least 40 liters hydrogen gas per minute for a period of 10-90 minutes, e.g. at least 45 liters hydrogen gas per minute for a period of 10-90 minutes, such as at least 50 liters hydrogen gas per minute for a period of 10-90 minutes, e.g. at least 55 liters hydrogen gas per minute for a period of 10-90 minutes, such as at least 60 liters hydrogen gas per minute for a period of 10-90 minutes, e.g. at least 65 liters hydrogen gas per minute for a period of 10-90 minutes, such as at least 70 liters hydrogen gas per minute for a period of 10-90 minutes, e.g. at least 75 liters hydrogen gas per minute for a period of 10-90 minutes, such as at least 80 liters hydrogen gas per minute for a period of 10-90 minutes, e.g. at least 85 liters hydrogen gas per minute for a period of 10-90 minutes, such as at least 90 liters hydrogen gas per minute for a period of 10-90 minutes, e.g. at least 95 liters hydrogen gas per minute for a period of 10-90 minutes, such as at least 100 liters hydrogen gas per minute for a period of 10-90 minutes, e.g. at least 105 liters hydrogen gas per minute for a period of 10-90 minutes, such as at least 110 liters hydrogen gas per minute for a period of 10-90 minutes, e.g. at least 115 liters hydrogen gas per minute for a period of 10-90 minutes, such as at least 120 liters hydrogen gas per minute for a period of 10-90 minutes, e.g. at least 125 liters hydrogen gas per minute for a period of 10-90 minutes, such as at least 130 liters hydrogen gas per minute for a period of 10-90 minutes, e.g. at least 135 liters hydrogen gas per minute for a period of 10-90 minutes, such as at least 140 liters hydrogen gas per minute for a period of 10-90 minutes, e.g. at least 145 liters hydrogen gas per minute for a period of 10-90 minutes, such as at least 150 liters hydrogen gas per minute for a period of 10-90 minutes, e.g. at least 155 liters hydrogen gas per minute for a period of 10-90 minutes, such as at least 160 liters hydrogen gas per minute for a period of 10-90 minutes, e.g. at least 165 liters hydrogen gas per minute for a period of 10-90 minutes, such as at least 170 liters hydrogen gas per minute for a period of 10-90 minutes, e.g. at least 175 liters hydrogen gas per minute for a period of 10-90 minutes, such as at least 180 liters hydrogen gas per minute for a period of 10-90 minutes, e.g. at least 185 liters hydrogen gas per minute for a period of 10-90 minutes, such as at least 190 liters hydrogen gas per minute for a period of 10-90 minutes, e.g. at least 195 liters hydrogen gas per minute for a period of 10-90 minutes. Preferably, the internal combustion engine is treated for 10-90 minutes, such as for 15-85 minutes, e.g. for 20-80 minutes, such as for 25-75 minutes, e.g. for 30-70 minutes, such as for 35-65 minutes, e.g. for 40-60 minutes, and even more preferred for 10-35 minutes, such as for 15-30 minutes, e.g. for 20-25 minutes. The inventor has found that a period of 15-30 minutes is ideal.

In one or more embodiments, the hydrogen gas is delivered at an amount of 15-200 liters per minute for a period of 10-90 minutes, such as within the range of 20-195 liters hydrogen gas per minute for a period of 10-90 minutes, e.g. 25-190 liters hydrogen gas per minute for a period of 10-90 minutes, such as within the range of 30-185 liters hydrogen gas per minute for a period of 10-90 minutes, e.g. 35-170 liters hydrogen gas per minute for a period of 10-90 minutes, such as within the range of 40-165 liters hydrogen gas per minute for a period of 10-90 minutes, e.g. 45-160 liters hydrogen gas per minute for a period of 10-90 minutes, such as within the range of 50-155 liters hydrogen gas per minute for a period of 10-90 minutes, e.g. 55-150 liters hydrogen gas per minute for a period of 10-90 minutes, such as within the range of 60-145 liters hydrogen gas per minute for a period of 10-90 minutes, e.g. 65-140 liters hydrogen gas per minute for a period of 10-90 minutes, such as within the range of 70-135 liters hydrogen gas per minute for a period of 10-90 minutes, e.g. 75-130 liters hydrogen gas per minute for a period of 10-90 minutes, such as within the range of 80-125 liters hydrogen gas per minute for a period of 10-90 minutes, e.g. 85-120 liters hydrogen gas per minute for a period of 10-90 minutes, such as within the range of 90-115 liters hydrogen gas per minute for a period of 10-90 minutes, e.g. 95-110 liters hydrogen gas per minute for a period of 10-90 minutes.

In one or more embodiments, the internal combustion engine suitable for the treatment has an engine displacement of 1-30 liters, such as an engine displacement of 2-29 liters, e.g. an engine displacement of 3-28 liters, such as an engine displacement of 4-27 liters, e.g. an engine displacement of 5-26 liters, such as an engine displacement of 6-25 liters, e.g. an engine displacement of 7-24 liters, such as an engine displacement of 8-23 liters, e.g. an engine displacement of 9-22 liters, such as an engine displacement of 10-21 liters, e.g. an engine displacement of 11-20 liters, such as an engine displacement of 12-19 liters, e.g. an engine displacement of 13-18 liters, such as an engine displacement of 14-17 liters, e.g. an engine displacement of 15-16 liters.

In one or more embodiments, an internal combustion engine with an engine displacement of 1-3 liters is treated with 15-30 liters hydrogen gas per minute for a period of 10-90 minutes.

In one or more embodiments, an internal combustion engine with an engine displacement of 4-6 liters is treated with 30-50 liters hydrogen gas per minute for a period of 10-90 minutes.

In one or more embodiments, an internal combustion engine with an engine displacement of 7-9 liters is treated with 45-70 liters hydrogen gas per minute for a period of 10-90 minutes.

In one or more embodiments, an internal combustion engine with an engine displacement of 10-12 liters is treated with 60-90 liters hydrogen gas per minute for a period of 10-90 minutes.

In one or more embodiments, an internal combustion engine with an engine displacement of 13-15 liters is treated with 75-110 liters hydrogen gas per minute for a period of 10-90 minutes.

In one or more embodiments, an internal combustion engine with an engine displacement of 16-18 liters is treated with 90-130 liters hydrogen gas per minute for a period of 10-90 minutes.

In one or more embodiments, an internal combustion engine with an engine displacement of 19-21 liters is treated with 105-150 liters hydrogen gas per minute for a period of 10-90 minutes.

In one or more embodiments, an internal combustion engine with an engine displacement of 22-24 liters is treated with 120-170 liters hydrogen gas per minute for a period of 10-90 minutes.

In one or more embodiments, an internal combustion engine with an engine displacement of 25-27 liters is treated with 135-190 liters hydrogen gas per minute for a period of 10-90 minutes.

In one or more embodiments, an internal combustion engine with an engine displacement of 28-30 liters is treated with 150-210 liters hydrogen gas per minute for a period of 10-90 minutes.

In one or more embodiments, the hydrogen and oxygen gas is delivered into the air intake duct of the internal combustion engine.

In one or more embodiments, the hydrogen and oxygen gas is mixed with the air entering the air intake duct of the internal combustion engine prior to reaching the internal combustion engine.

A second aspect relates to a gas delivery system adapted for cleaning an internal combustion engine, the gas delivery system comprising:
- means configured for producing hydrogen gas by performing electrolysis on water, and configured for delivering hydrogen in an amount of at least 15 liters per minute for a period of 10-90 minutes; and
- means adapted for transferring the produced hydrogen, and optional oxygen, to the internal combustion engine when the engine operates idle.

A third aspect relates to the use of a gas delivery system configured to deliver hydrogen gas, and optionally oxygen gas, for cleaning an internal combustion engine; wherein an internal combustion engine with an engine displacement of 1-20 liters is treated with 900-2,500 liters of hydrogen gas per hour; wherein the hydrogen, and optionally the oxygen gas, is delivered into the air intake duct of the internal combustion engine; wherein the hydrogen gas, and optionally the oxygen gas, is continuously produced by means capable of performing electrolysis on water, and wherein a direct current electrical supply is configured to deliver direct current pulses of 200-1000 Hertz to the means capable of performing electrolysis on water.

A fourth aspect relates to a gas delivery system adapted for cleaning an internal combustion engine, the gas delivery system comprising:
- means capable of performing electrolysis on water; and
- means adapted for transferring the produced hydrogen to an internal combustion engine;
- a direct current electrical supply configured to deliver direct current pulses of 200-1000 Hertz to the means capable of performing electrolysis on water; and
- a controller adapted for receiving user input about the engine displacement of an internal combustion engine to be treated, the engine displacement being within the range of 1-20 liters, and in response to said input, instruct the means capable of performing electrolysis on water to produce a specific amount of hydrogen per hour within the range of 900-2,500 liters of hydrogen gas per hour.

In one or more embodiments, an internal combustion engine with an engine displacement of 10-20 liters is treated with 900-2,500 liters of hydrogen gas per hour, such as within the range of 900-2,400 liters of hydrogen gas per hour, e.g. within the range of 900-2,300 liters of hydrogen gas per hour, such as within the range of 900-2,200 liters of hydrogen gas per hour, e.g. within the range of 950-2,100 liters of hydrogen gas per hour, such as within the range of 1,000-2,000 liters of hydrogen gas per hour, e.g. within the range of 1,100-1,900 liters of hydrogen gas per hour, such as within the range of 1,200-1,800 liters of hydrogen gas per hour, e.g. within the range of 1,300-1,700 liters of hydrogen gas per hour, such as within the range of 1,400-1,600 liters of hydrogen gas per hour, e.g. within the range of 1,450-1,550 liters of hydrogen gas per hour.

In one or more embodiments, the hydrogen, and optionally the oxygen gas, is mixed with the air entering the air intake duct of the internal combustion engine prior to reaching the internal combustion engine.

A fifth aspect relates to a gas delivery system adapted for cleaning an internal combustion engine, the gas delivery system comprising:
- means configured for producing hydrogen gas by performing electrolysis on water, and configured for delivering hydrogen in an amount of at least 15 liters per minute for a period of 10-90 minutes; and
- means adapted for transferring the produced hydrogen, and optional oxygen, to the air intake duct of an internal combustion engine when the engine operates idle.

In one or more embodiments, the means configured to deliver hydrogen in an amount of at least 15 liters per minute comprises means configured to perform pulsed direct current electrolysis on water; and wherein the gas delivery system further comprises a controller adapted for receiving user input about the engine displacement of an internal combustion engine to be cleaned, and in response to said input, instruct the means configured to perform electrolysis on water to produce a specific amount of hydrogen per minute; wherein the specific amount is at least 15 liters per minute.

In one or more embodiments, the gas delivery system further comprises a heating unit configured to heat the water for the electrolysis process to a temperature within the range of 20-40 degrees Celsius, such as within the range of 25-35 degrees Celsius. The inventor has found that this temperature range is optimal for obtaining large quantities of hydrogen gas.

In one or more embodiments, the gas delivery system further comprises means configured for sensing if the internal combustion engine stops during the cleaning operation, and configured to automatically shut down the means configured to perform electrolysis on water if the internal combustion engine stops during the cleaning operation. This configuration is a security measure to avoid the production of large quantities of hydrogen gas that may accidentally ignite in the room where the internal combustion engine is treated.

In one or more embodiments, the means configured for sensing if the internal combustion engine stops during the cleaning operation comprises a vibration sensor adapted for being mounted to the engine block and/or to the bodywork of the vehicle that comprises the internal combustion engine. The means may we wired or wireless.

In one or more embodiments, the gas delivery system further comprises a controller adapted for receiving user input about the engine displacement of an internal combustion engine to be treated, and in response to said input, instruct the means configured to perform electrolysis on water to produce a specific amount of hydrogen per hour.

The present invention is not limited by a specific type of means configured to perform electrolysis on water. However, an example of a means configured to perform electrolysis on water could comprise:
an electrolytic cell, for generation of a water electrolytic gas, including
an electrolyte inlet (e.g. formed in a bottom wall),
an outlet (e.g. formed in a top wall) adapted to extract a mixture of an electrolyte and a generated gas,
an anode plate (e.g. internally arranged near the bottom wall),
a cathode plate (e.g. internally arranged near a top wall), and
an electrolyte spinning and passing portion, for spinning and passing an alkali electrolyte in a direction leading from the anode plate to the cathode plate;
a separation cell, for an electrolyte/water electrolytic gas, in which gas-liquid separation is performed for the mixture that has been extracted from the outlet in the upper end of the electrolytic cell and the mixture that includes the electrolyte and a water electrolytic gas, and as a result, gas components comprising the water electrolytic gas are separated from the electrolyte, so that only the gas components are externally extracted, while an electrolyte component is retained, internally; and
an electrolyte circulation unit, for circulating, toward the electrolytic cell, the electrolyte that has been retained in the separation cell. The electrolyte spinning and passing portion, which is located between the anode plate and the cathode plate in the electrolytic cell, may comprise a predetermined number of metal plates (e.g. 5 steel plates) with a plurality of electrolyte passage openings. The metal plates are arranged by sequentially displacing the electrolyte passage openings at a predetermined angle, so that the electrolyte is passed through the metal plates, while spinning is being performed.

The metal plates are not electrically connected to the anode plate or the cathode plate, or to another portion or each other. Instead, the metal plates are securely supported by an insulating member.

Potassium hydroxide (KOH), which is an alkali electrolyte, and water are introduced into the electrolytic cell, and a direct-current voltage is applied between the anode plate, arranged inside, near the bottom of the electrolytic cell, and the cathode plate, arranged near the top thereof, in accordance with the polarities of these electrodes. As a result, the potassium hydroxide (KOH) electrolyte and water are forced upwards in the electrolytic cell, while being spun between the anode plate, located near the bottom, and the cathode, located near the top. During this process, electrolysis progresses, while the reaction for the generation of hydrogen gas (and oxygen gas) continues to develop in the electrolyte solution. When electrons collide with a metal plate (that serves as a member of the electrolyte spinning and passing portion), arranged between the anode plate and the cathode plate, oxonium ions (H₃O⁺) are generated by the collisions and are moved to the cathode side, and anions (OH⁻) are also so generated and are moved to the anode side. When multiple metal plates have been so arranged, a large quantity of water electrolytic gas can be generated in the electrolytic cell. Thereafter, the mixture of the electrolyte and an increased amount of the thus generated hydrogen gas is extracted via the outlet formed in the upper end of the electrolytic cell. As would be appreciated by a person skilled in the art, the size of the anode and cathode plates, the magnitude of the electric current (voltage, amperes) used, and the flow and temperature of the electrolyte solution are decisive for the amount of generated hydrogen gas (and oxygen gas).

The thus extracted mixture of the electrolyte and the hydrogen gas is passed through a connecting pipe to a separation cell, in which gas-liquid separation is thereafter performed to separate the hydrogen gas from the electrolyte. Hence, only the hydrogen gas (and oxygen gas) is extracted via the lead-out pipe, and is transferred to the internal combustion motor. The residual electrolyte is recirculated through the electrolytic cell to continue the above described reaction process.

As an example, an internal combustion engine with an engine displacement of 3 liters is treated with 25 liters hydrogen gas per minute for a period of 20-30 minutes. The means configured to deliver hydrogen gas comprises means configured to perform pulsed direct current electrolysis on water (potassium hydroxide solution, 25% KOH w/w). The electrolysis is conducted with a pulsed direct current of 36 volts (60 amperes), and at a frequency of 400 Hz.

As another example, an internal combustion engine with an engine displacement of 20 liters is treated with 110 liters hydrogen gas per minute for a period of 20-30 minutes. The means configured to deliver hydrogen gas comprises means configured to perform pulsed direct current electrolysis on water (potassium hydroxide solution, 25% KOH w/w). The electrolysis is conducted with a pulsed direct current of 77 volts (260 amperes), and at a frequency of 400 Hz.

## Claims

1. Use of a gas delivery system for cleaning a vehicle's internal combustion engine operating in idle mode; wherein the gas delivery system is adapted to deliver hydrogen gas, and optionally oxygen gas, into the air intake duct of the internal combustion engine when the engine operates idle; wherein the hydrogen gas, and optionally the oxygen gas, is continuously produced by electrolysis of water; wherein the gas delivery system is adapted to deliver hydrogen gas in a predefined amount in response to user input about the internal combustion engine's engine displacement, said amount being:
i) 15-30 liters hydrogen gas per minute for a period of 10-90 minutes when the internal combustion engine has an engine displacement of 1-3 liters;
ii) 30-50 liters hydrogen gas per minute for a period of 10-90 minutes when the internal combustion engine has an engine displacement of 4-6 liters;
iii) 45-70 liters hydrogen gas per minute for a period of 10-90 minutes when the internal combustion engine has an engine displacement of 7-9 liters;
iv) 60-90 liters hydrogen gas per minute for a period of 10-90 minutes when the internal combustion engine has an engine displacement of 10-12 liters;
v) 75-110 liters hydrogen gas per minute for a period of 10-90 minutes when the internal combustion engine has an engine displacement of 13-15 liters;
vi) 90-130 liters hydrogen gas per minute for a period of 10-90 minutes when the internal combustion engine has an engine displacement of 16-18 liters;
vii) 105-150 liters hydrogen gas per minute for a period of 10-90 minutes when the internal combustion engine has an engine displacement of 19-21 liters;
viii) 120-170 liters hydrogen gas per minute for a period of 10-90 minutes when the internal combustion engine has an engine displacement of 22-24 liters;
ix) 135-190 liters hydrogen gas per minute for a period of 10-90 minutes when the internal combustion engine has an engine displacement of 25-27 liters; and
x) 150-210 liters hydrogen gas per minute for a period of 10-90 minutes when the internal combustion engine has an engine displacement of 28-30 liters.

2. Use according to claim 1, wherein the hydrogen gas is delivered to the internal combustion engine for 10-50 minutes.

3. Use according to any one of the claims 1-2, wherein the gas delivery is automatically stopped if the internal combustion engine stops during the cleaning operation.

4. Use according to any one of the claims 1-3, wherein the hydrogen gas is mixed with the air entering the air intake duct of the internal combustion engine prior to reaching the internal combustion engine.

5. Use according to any one of the claims 1-4, wherein the water for the electrolysis process is heated to a temperature within the range of 20-40 degrees Celsius.

6. A gas delivery system adapted for cleaning a vehicle's internal combustion engine operating in idle mode, the system comprising:
- means configured to produce hydrogen gas by performing electrolysis on water, and configured for delivering a specific amount of hydrogen gas in response to user input about the internal combustion engine's engine displacement; and
- means adapted for transferring the produced hydrogen, and optional oxygen, to the air intake duct of an internal combustion engine when the engine operates idle;
- a controller adapted for receiving user input about the engine displacement of an internal combustion engine to be cleaned, and in response to said input, instruct the means configured to perform electrolysis on water to produce a specific amount of hydrogen per minute, and wherein said amount is:
i) 15-30 liters hydrogen gas per minute for a period of 10-90 minutes when the internal combustion engine has an engine displacement of 1-3 liters;
ii) 30-50 liters hydrogen gas per minute for a period of 10-90 minutes when the internal combustion engine has an engine displacement of 4-6 liters;
iii) 45-70 liters hydrogen gas per minute for a period of 10-90 minutes when the internal combustion engine has an engine displacement of 7-9 liters;
iv) 60-90 liters hydrogen gas per minute for a period of 10-90 minutes when the internal combustion engine has an engine displacement of 10-12 liters;
v) 75-110 liters hydrogen gas per minute for a period of 10-90 minutes when the internal combustion engine has an engine displacement of 13-15 liters;
vi) 90-130 liters hydrogen gas per minute for a period of 10-90 minutes when the internal combustion engine has an engine displacement of 16-18 liters;
vii) 105-150 liters hydrogen gas per minute for a period of 10-90 minutes when the internal combustion engine has an engine displacement of 19-21 liters;
viii) 120-170 liters hydrogen gas per minute for a period of 10-90 minutes when the internal combustion engine has an engine displacement of 22-24 liters;
ix) 135-190 liters hydrogen gas per minute for a period of 10-90 minutes when the internal combustion engine has an engine displacement of 25-27 liters; and
x) 150-210 liters hydrogen gas per minute for a period of 10-90 minutes when the internal combustion engine has an engine displacement of 28-30 liters.

7. A gas delivery system according to claim 6, wherein the means configured to produce hydrogen gas by performing electrolysis on water comprises means configured to perform pulsed direct current electrolysis on water.

8. A gas delivery system according to any one of the claims 6-7, further comprising a heating unit configured to heat the water for the electrolysis process to a temperature within the range of 20-40 degrees Celsius.

9. A gas delivery system according to any one of the claims 6-8, further comprising means configured for sensing if the internal combustion engine stops during the cleaning operation, and configured to automatically shut down the means configured to perform electrolysis on water if the internal combustion engine stops during the cleaning operation.

10. A gas delivery system according to claim 9, wherein the means configured for sensing if the internal combustion engine stops during the cleaning operation comprises a vibration sensor adapted for being mounted to the engine block and/or to the bodywork of the vehicle that comprises the internal combustion engine.

## Patentansprüche

1. Verwendung eines Gaszufuhrsystems zum Reinigen eines im Leerlauf betriebenen Verbrennungsmotors eines Fahrzeugs, wobei das Gaszufuhrsystem dazu ausgelegt ist, dem Lufteinlasskanal des Verbrennungsmotors Wasserstoffgas und optional Sauerstoffgas zuzuführen, wenn der Motor im Leerlauf betrieben wird, wobei das Wasserstoffgas und optional das Sauerstoffgas kontinuierlich durch Elektrolyse von Wasser erzeugt werden, wobei das Gaszufuhrsystem dazu ausgelegt ist, Wasserstoffgas in einer vordefinierten Menge als Reaktion auf eine Benutzereingabe über den Hubraum des Verbrennungsmotors zuzuführen, wobei die Menge beträgt:
i) 15-30 Liter Wasserstoffgas pro Minute für einen Zeitraum von 10-90 Minuten, wenn der Verbrennungsmotor einen Hubraum von 1-3 Liter aufweist;
ii) 30-50 Liter Wasserstoffgas pro Minute für einen Zeitraum von 10-90 Minuten, wenn der Verbrennungsmotor einen Hubraum von 4-6 Liter aufweist;
iii) 45-70 Liter Wasserstoffgas pro Minute für einen Zeitraum von 10-90 Minuten, wenn der Verbrennungsmotor einen Hubraum von 7-9 Liter aufweist;
iv) 60-90 Liter Wasserstoffgas pro Minute für einen Zeitraum von 10-90 Minuten, wenn der Verbrennungsmotor einen Hubraum von 10-12 Liter aufweist;
v) 75-110 Liter Wasserstoffgas pro Minute für einen Zeitraum von 10-90 Minuten, wenn der Verbrennungsmotor einen Hubraum von 13-15 Liter aufweist;
vi) 90-130 Liter Wasserstoffgas pro Minute für einen Zeitraum von 10-90 Minuten, wenn der Verbrennungsmotor einen Hubraum von 16-18 Liter aufweist;
vii) 105-150 Liter Wasserstoffgas pro Minute für einen Zeitraum von 10-90 Minuten, wenn der Verbrennungsmotor einen Hubraum von 19-21 Liter aufweist;
viii) 120-170 Liter Wasserstoffgas pro Minute für einen Zeitraum von 10-90 Minuten, wenn der Verbrennungsmotor einen Hubraum von 22-24 Liter aufweist;
ix) 135-190 Liter Wasserstoffgas pro Minute für einen Zeitraum von 10-90 Minuten, wenn der Verbrennungsmotor einen Hubraum von 25-27 Liter aufweist;
x) 150-210 Liter Wasserstoffgas pro Minute für einen Zeitraum von 10-90 Minuten, wenn der Verbrennungsmotor einen Hubraum von 28-30 Liter aufweist.

2. Verwendung nach Anspruch 1, wobei das Wasserstoffgas 10-50 Minuten lang dem Verbrennungsmotor zugeführt wird.

3. Verwendung nach einem der Ansprüche 1-2, wobei die Gaszufuhr automatisch gestoppt wird, wenn der Verbrennungsmotor während des Reinigungsvorgangs stoppt.

4. Verwendung nach einem der Ansprüche 1-3, wobei das Wasserstoffgas mit der Luft gemischt wird, die in den Luftansaugkanal des Verbrennungsmotors eintritt, bevor sie den Verbrennungsmotor erreicht.

5. Verwendung nach einem der Ansprüche 1-4, wobei das Wasser für den Elektrolyseprozess auf eine Temperatur im Bereich von 20-40 Grad Celsius erhitzt wird.

6. Gaszufuhrsystem, das zum Reinigen eines im Leerlaufbetrieb betriebenen Verbrennungsmotors eines Fahrzeugs ausgelegt ist, wobei das System umfasst:
eine Einrichtung, die dazu konfiguriert ist, durch Elektrolyse von Wasser Wasserstoffgas zu erzeugen, und die dazu konfiguriert ist, als Reaktion auf eine Benutzereingabe über den Hubraum des Verbrennungsmotors eine bestimmte Menge an Wasserstoffgas zuzuführen; und
eine Einrichtung, die dazu ausgelegt ist, den erzeugten Wasserstoff und gegebenenfalls Sauerstoff im Leerlaufbetrieb in den Luftansaugkanal eines Verbrennungsmotors zu übertragen;
eine Steuerung, die dazu ausgelegt ist, eine Benutzereingabe über den Hubraum eines zu reinigenden Verbrennungsmotors zu empfangen und als Reaktion auf diese Eingabe die Einrichtung, die dazu konfiguriert ist, eine Elektrolyse von Wasser durchzuführen, anzuweisen, eine bestimmte Menge an Wasserstoff pro Minute zu erzeugen, und wobei diese Menge beträgt:
i) 15-30 Liter Wasserstoffgas pro Minute für einen Zeitraum von 10-90 Minuten, wenn der Verbrennungsmotor einen Hubraum von 1-3 Liter aufweist;
ii) 30-50 Liter Wasserstoffgas pro Minute für einen Zeitraum von 10-90 Minuten, wenn der Verbrennungsmotor einen Hubraum von 4-6 Liter aufweist;
iii) 45-70 Liter Wasserstoffgas pro Minute für einen Zeitraum von 10-90 Minuten, wenn der Verbrennungsmotor einen Hubraum von 7-9 Liter aufweist;
iv) 60-90 Liter Wasserstoffgas pro Minute für einen Zeitraum von 10-90 Minuten, wenn der Verbrennungsmotor einen Hubraum von 10-12 Liter aufweist;
v) 75-110 Liter Wasserstoffgas pro Minute für einen Zeitraum von 10-90 Minuten, wenn der Verbrennungsmotor einen Hubraum von 13-15 Liter aufweist;
vi) 90-130 Liter Wasserstoffgas pro Minute für einen Zeitraum von 10-90 Minuten, wenn der Verbrennungsmotor einen Hubraum von 16-18 Liter aufweist;
vii) 105-150 Liter Wasserstoffgas pro Minute für einen Zeitraum von 10-90 Minuten, wenn der Verbrennungsmotor einen Hubraum von 19-21 Liter aufweist;
viii) 120-170 Liter Wasserstoffgas pro Minute für einen Zeitraum von 10-90 Minuten, wenn der Verbrennungsmotor einen Hubraum von 22-24 Liter aufweist;
ix) 135-190 Liter Wasserstoffgas pro Minute für einen Zeitraum von 10-90 Minuten, wenn der Verbrennungsmotor einen Hubraum von 25-27 Liter aufweist;
x) 150-210 Liter Wasserstoffgas pro Minute für einen Zeitraum von 10-90 Minuten, wenn der Verbrennungsmotor einen Hubraum von 28-30 Liter aufweist.

7. Gaszufuhrsystem nach Anspruch 6, wobei die Einrichtung, die dazu konfiguriert ist, Wasserstoffgas durch Durchführen einer Elektrolyse von Wasser zu erzeugen, eine Einrichtung umfasst, die dazu konfiguriert ist, eine gepulste Gleichstromelektrolyse von Wasser durchzuführen.

8. Gaszufuhrsystem nach einem der Ansprüche 6-7, ferner umfassend eine Heizeinheit, die dazu konfiguriert ist, das Wasser für den Elektrolyseprozess auf eine Temperatur im Bereich von 20-40 Grad Celsius zu erwärmen.

9. Gaszufuhrsystem nach einem der Ansprüche 6-8, ferner umfassend eine Einrichtung, die dazu konfiguriert ist, zu erfassen, ob der Verbrennungsmotor während des Reinigungsvorgangs stoppt, und dazu konfiguriert ist, die Einrichtung, die dazu konfiguriert ist, eine Elektrolyse von Wasser durchzuführen, automatisch herunterzufahren, wenn der Verbrennungsmotor während des Reinigungsvorgangs stoppt.

10. Gaszufuhrsystem nach Anspruch 9, wobei die Einrichtung, die dazu konfiguriert ist, zu erfassen, ob der Verbrennungsmotor während des Reinigungsvorgangs stoppt, einen Vibrationssensor umfasst, der dazu ausgelegt ist, am Motorblock und/oder an der Karosserie des Fahrzeugs, das den Verbrennungsmotor umfasst, angebracht zu werden.

## Revendications

1. Utilisation d'un système de distribution de gaz pour nettoyer le moteur à combustion interne d'un véhicule fonctionnant en mode ralenti ; dans laquelle le système de distribution de gaz est conçu pour distribuer de l'hydrogène gazeux, et éventuellement de l'oxygène gazeux, dans le conduit d'admission d'air du moteur à combustion interne lorsque le moteur fonctionne au ralenti ; dans laquelle l'hydrogène gazeux, et éventuellement l'oxygène gazeux, est produit en continu par électrolyse de l'eau ; dans laquelle le système de distribution de gaz est conçu pour distribuer de l'hydrogène gazeux en une quantité prédéfinie en réponse à une entrée utilisateur concernant la cylindrée du moteur à combustion interne, ladite quantité étant :
i) 15 à 30 litres d'hydrogène gazeux par minute pendant une période de 10 à 90 minutes lorsque le moteur à combustion interne a une cylindrée de 1 à 3 litres ;
ii) 30 à 50 litres d'hydrogène gazeux par minute pendant une période de 10 à 90 minutes lorsque le moteur à combustion interne a une cylindrée de 4 à 6 litres ;
iii) 45 à 70 litres d'hydrogène gazeux par minute pendant une période de 10 à 90 minutes lorsque le moteur à combustion interne a une cylindrée de 7 à 9 litres ;
iv) 60 à 90 litres d'hydrogène gazeux par minute pendant une période de 10 à 90 minutes lorsque le moteur à combustion interne a une cylindrée de 10 à 12 litres ;
v) 75 à 110 litres d'hydrogène gazeux par minute pendant une période de 10 à 90 minutes lorsque le moteur à combustion interne a une cylindrée de 13 à 15 litres ;
vi) 90 à 130 litres d'hydrogène gazeux par minute pendant une période de 10 à 90 minutes lorsque le moteur à combustion interne a une cylindrée de 16 à 18 litres ;
vii) 105 à 150 litres d'hydrogène gazeux par minute pendant une période de 10 à 90 minutes lorsque le moteur à combustion interne a une cylindrée de 19 à 21 litres ;
viii) 120 à 170 litres d'hydrogène gazeux par minute pendant une période de 10 à 90 minutes lorsque le moteur à combustion interne a une cylindrée de 22 à 24 litres ;
ix) 135 à 190 litres d'hydrogène gazeux par minute pendant une période de 10 à 90 minutes lorsque le moteur à combustion interne a une cylindrée de 25 à 27 litres ; et
x) 150 à 210 litres d'hydrogène gazeux par minute pendant une période de 10 à 90 minutes lorsque le moteur à combustion interne a une cylindrée de 28 à 30 litres.

2. Utilisation selon la revendication 1, dans laquelle l'hydrogène gazeux est délivré au moteur à combustion interne pendant 10 à 50 minutes.

3. Utilisation selon l'une quelconque des revendications 1 et 2, dans laquelle la distribution de gaz est automatiquement arrêtée si le moteur à combustion interne s'arrête pendant l'opération de nettoyage.

4. Utilisation selon l'une quelconque des revendications 1 à 3, dans laquelle l'hydrogène gazeux est mélangé à l'air entrant dans le conduit d'admission d'air du moteur à combustion interne avant d'atteindre le moteur à combustion interne.

5. Utilisation selon l'une quelconque des revendications 1 à 4, dans laquelle l'eau pour le processus d'électrolyse est chauffée à une température comprise entre 20 et 40 degrés Celsius.

6. Système de distribution de gaz conçu pour nettoyer le moteur à combustion interne d'un véhicule fonctionnant en mode ralenti, le système comprenant :
un moyen configuré pour produire de l'hydrogène gazeux en exécutant une électrolyse sur de l'eau, et configuré pour délivrer une quantité spécifique d'hydrogène gazeux en réponse à une entrée utilisateur concernant la cylindrée du moteur à combustion interne ; et
un moyen conçu pour transférer l'hydrogène produit, et l'éventuel oxygène, dans le conduit d'admission d'air d'un moteur à combustion interne lorsque le moteur fonctionne au ralenti ;
un dispositif de commande conçu pour recevoir une entrée utilisateur concernant la cylindrée du moteur à combustion interne à nettoyer, et en réponse à cette entrée, ordonner au moyen configuré pour exécuter une électrolyse sur l'eau de produire une quantité spécifique d'hydrogène par minute, ladite quantité étant :
i) 15 à 30 litres d'hydrogène gazeux par minute pendant une période de 10 à 90 minutes lorsque le moteur à combustion interne a une cylindrée de 1 à 3 litres ;
ii) 30 à 50 litres d'hydrogène gazeux par minute pendant une période de 10 à 90 minutes lorsque le moteur à combustion interne a une cylindrée de 4 à 6 litres ;
iii) 45 à 70 litres d'hydrogène gazeux par minute pendant une période de 10 à 90 minutes lorsque le moteur à combustion interne a une cylindrée de 7 à 9 litres ;
iv) 60 à 90 litres d'hydrogène gazeux par minute pendant une période de 10 à 90 minutes lorsque le moteur à combustion interne a une cylindrée de 10 à 12 litres ;
v) 75 à 110 litres d'hydrogène gazeux par minute pendant une période de 10 à 90 minutes lorsque le moteur à combustion interne a une cylindrée de 13 à 15 litres ;
vi) 90 à 130 litres d'hydrogène gazeux par minute pendant une période de 10 à 90 minutes lorsque le moteur à combustion interne a une cylindrée de 16 à 18 litres ;
vii) 105 à 150 litres d'hydrogène gazeux par minute pendant une période de 10 à 90 minutes lorsque le moteur à combustion interne a une cylindrée de 19 à 21 litres ;
viii) 120 à 170 litres d'hydrogène gazeux par minute pendant une période de 10 à 90 minutes lorsque le moteur à combustion interne a une cylindrée de 22 à 24 litres ;
ix) 135 à 190 litres d'hydrogène gazeux par minute pendant une période de 10 à 90 minutes lorsque le moteur à combustion interne a une cylindrée de 25 à 27 litres ; et
x) 150 à 210 litres d'hydrogène gazeux par minute pendant une période de 10 à 90 minutes lorsque le moteur à combustion interne a une cylindrée de 28 à 30 litres.

7. Système de distribution de gaz selon la revendication 6, dans lequel le moyen configuré pour produire de l'hydrogène gazeux en exécutant une électrolyse sur l'eau comprend un moyen configuré pour exécuter une électrolyse en courant continu pulsé sur l'eau.

8. Système de distribution de gaz selon l'une quelconque des revendications 6 et 7, comprenant en outre une unité de chauffage configurée pour chauffer l'eau pour le processus d'électrolyse à une température dans la plage de 20 à 40 degrés Celsius.

9. Système de distribution de gaz selon l'une quelconque des revendications 6 à 8, comprenant en outre un moyen configuré pour détecter si le moteur à combustion interne s'arrête pendant l'opération de nettoyage, et configuré pour arrêter automatiquement le moyen configuré pour exécuter une électrolyse sur l'eau si le moteur à combustion interne s'arrête pendant l'opération de nettoyage.

10. Système de distribution de gaz selon la revendication 9, dans lequel le moyen configuré pour détecter si le moteur à combustion interne s'arrête lors de l'opération de nettoyage comprend un capteur de vibrations conçu pour être monté sur le bloc moteur et/ou sur la carrosserie du véhicule qui comprend le moteur à combustion interne.
